# EUROPÄISCHE PATENTSCHRIFT

(11) **EP 4 107 805 B1**
(45) Veröffentlichungstag und Bekanntmachung des Hinweises auf die Patenterteilung: **07.05.2025**
(21) Anmeldenummer: 21705143.2
(22) Anmeldetag: 10.02.2021
(51) Int. Cl.: H01M 8/04089, H01M 8/04111, H01M 8/0438

(54) **VERFAHREN ZUM BETREIBEN EINES BRENNSTOFFZELLENSYSTEMS, BRENNSTOFFZELLENSYSTEM**
METHOD FOR OPERATING A FUEL CELL SYSTEM, AND FUEL CELL SYSTEM
PROCÉDÉ DE FONCTIONNEMENT DE SYSTÈME DE PILE À COMBUSTIBLE ET SYSTÈME DE PILE À COMBUSTIBLE

(30) Priorität: 21.02.2020 DE 102020202283
(43) Veröffentlichungstag der Anmeldung: 28.12.2022
(73) Patentinhaber: Robert Bosch GmbH, 70442 Stuttgart (DE)
(72) Erfinder: BRAUN, Jochen, 71296 Heimsheim (DE)
(86) Internationale Anmeldenummer: PCT/EP2021/053197
(87) Internationale Veröffentlichungsnummer: WO 2021/165117

(56) Entgegenhaltungen:
- DE-A1- 102010 035 727
- DE-A1- 102015 221 597
- DE-A1- 102016 003 795
- DE-A1- 102018 213 713

## Beschreibung

Die Erfindung betrifft ein Verfahren zum Betreiben eines Brennstoffzellensystems mit den Merkmalen des Oberbegriffs des Anspruchs 1. Darüber hinaus betrifft die Erfindung ein Brennstoffzellensystem, das zur Durchführung des erfindungsgemäßen Verfahrens geeignet bzw. nach dem erfindungsgemäßen Verfahren betreibbar ist.

### Stand der Technik

Mit Hilfe eines Brennstoffzellensystems kann unter Verwendung von Wasserstoff und Sauerstoff chemische in elektrische Energie umgewandelt werden. Die auf diese Weise gewonnene elektrische Energie kann beispielsweise zum Antreiben eines Fahrzeugs genutzt werden. Der benötigte Wasserstoff wird in diesem Fall in einem geeigneten Tank an Bord des Fahrzeugs mitgeführt. Der ferner benötigte Sauerstoff wird der Umgebungsluft entnommen.

Bevor die Umgebungsluft der mindestens einen Brennstoffzelle zugeführt wird, wird sie zur Erzeugung eines gewissen Luftmassenstroms und Druckniveaus mit Hilfe eines Luftverdichtungssystems verdichtet. Als Luftverdichtungssystem kann insbesondere eine thermische Strömungsmaschine eingesetzt werden, die ein- oder mehrstufig und/oder ein- oder mehrflutig aufgebaut sein kann. Zur Energierückgewinnung kann das Luftverdichtungssystem mit einer Turbine bzw. einem Abgasturbolader gekoppelt werden, der bzw. dem die aus der mindestens einen Brennstoffzelle abströmende feuchte Luft bzw. Abluft zugeführt wird. Sofern das Luftverdichtungssystem mehrstufig ausgeführt ist, kann zur Ausbildung einer Verdichtungsstufe anstelle einer thermischen Strömungsmaschine auch eine andere Technologie verwendet werden, beispielsweise eine Kolbenmaschine, ein Schraubenkompressor, ein Roots-Kompressor oder ein Scrollverdichter.

Die Patentveröffentlichungen DE 10 2016 003 795 A1 und DE 10 2010 035 727 A2 offenbaren jeweils ein Verfahren zum Betreiben eines Brennstoffzellensystems und ein Brennstoffzellensystem, wobei sich im Kathoden-Zuluftpfad ein zweistufiges Luftverdichtungssystem befindet. Der vorliegenden Erfindung liegt die Aufgabe zugrunde, den Betrieb eines Brennstoffzellensystems mit einem mehrstufigen Luftverdichtungssystem zu optimieren, insbesondere effizienter zu gestalten.

Zur Lösung der Aufgabe werden das Verfahren mit den Merkmalen des Anspruchs 1 sowie das Brennstoffzellensystem mit den Merkmalen des Anspruchs 7 angegeben. Vorteilhafte Ausführungsformen sind den jeweiligen Unteransprüchen zu entnehmen.

Die vorliegende Erfindung ist nicht allein auf mobile Brennstoffzellensysteme, sondern auch auf stationäre Brennstoffzellensysteme anwendbar.

### Offenbarung der Erfindung

Vorgeschlagen wird ein Verfahren zum Betreiben eines Brennstoffzellensystems, bei dem Luft aus der Umgebung angesaugt, mit Hilfe eines eine erste Verdichtungsstufe und eine zweite Verdichtungsstufe umfassenden Luftverdichtungssystems verdichtet und über einen Kathoden-Zuluftpfad mindestens einer Brennstoffzelle zugeführt wird. Bei dem Verfahren wird ferner aus der Brennstoffzelle austretende Abluft über einen Kathoden-Abluftpfad abgeführt. Erfindungsgemäß wird zumindest temporär ein Abluftteilmassenstrom aus dem Kathoden-Abluftpfad über eine Verbindungsleitung in den Kathoden-Zuluftpfad eingeleitet.

Da im Betrieb des Brennstoffzellensystems der Kathoden-Abluftpfad feuchte Luft als Abluft führt, kann durch Einleiten zumindest eines Teils der feuchten Luft in den Kathoden-Zuluftpfad eine Befeuchtung der Kathoden-Zuluft bewirkt werden. Eine zusätzliche Befeuchtungseinrichtung im Kathoden-Zuluftpfad ist somit entbehrlich. Die Befeuchtung der Kathoden-Zuluft dient dem Zweck, ein Austrocknen der protonenleitenden Membran der mindestens einen Brennstoffzelle zu verhindern. Denn, um Protonen leiten zu können, muss die Membran ausreichend feucht sein. Da die Gefahr des Austrocknens im Bereich des Eintritts des Kathoden-Zuluftpfads in die Brennstoffzelle besonders hoch ist, wird in der Regel die Kathoden-Zuluft befeuchtet. Das erfindungsgemäße Verfahren trägt somit zu einer Optimierung des Wassermanagements im Betrieb des Brennstoffzellensystems bei.

Ferner kann mit Hilfe des erfindungsgemäßen Verfahrens der Betrieb des Brennstoffzellensystems effizienter gestaltet werden. Denn mit Einleiten eines Abluftteilmassenstroms aus dem Kathoden-Abluftpfad in den Kathoden-Zuluftpfad wird zumindest ein Teil der Abluft rezirkuliert und damit einer Nutzung zugeführt. Der rezirkulierte Abluftteilmassenstrom kann für den Systembetrieb und/oder zur Systemauslegung genutzt werden, wobei die Systemauslegung den kompletten Betriebsbereich berücksichtigen muss.

Die vorgeschlagene Nutzung des Abluftteilmassenstroms ist insbesondere von Vorteil, wenn das Luftverdichtungssystem einen Abgasturbolader als Verdichtungsstufe umfasst, der ein gemeinsam mit einem Verdichterlaufrad auf einer Welle angeordnetes Turbinenlaufrad umfasst. Da beide Laufräder immer mit der gleichen Drehzahl und unterschiedlichen thermodynamischen Bedingungen in einem großen Betriebsbereich betrieben werden müssen, ist die Abstimmung zwischen beiden Laufrädern nicht immer optimal. Dies ist insbesondere der Fall, wenn aus Kostengründen auf eine variable Turbinengeometrie des Abgasturboladers verzichtet wird. Je nach Systemtopologie müssen daher in einer Vielzahl von Betriebspunkten, insbesondere in Betriebspunkten außerhalb des Volllastpunktes, Maßnahmen ergriffen werden, die stark verlustbehaftet sind. Beispielsweise kann ein Abluftteilmassenstrom über einen Turbinenbypass nutzlos abgeströmt werden, um die beiden Laufräder zu synchronisieren. Alternativ oder ergänzend kann mit Hilfe eines stromabwärts der Turbine angeordneten Druckregelventils eine signifikante Drosselung bewirkt werden. Derartige verlustbehaftete Maßnahmen sind jedoch entbehrlich, wenn erfindungsgemäß ein Abluftteilmassenstrom aus dem Kathoden-Abluftpfad in den Kathoden-Zuluftpfad abgeführt wird. Auf diese Weise kann mit Hilfe des erfindungsgemäßen Verfahrens insbesondere eine Verbesserung der Energiebilanz in dynamischen Betriebszuständen erzielt werden.

Vorteilhafterweise wird der Abluftteilmassenstrom zwischen den beiden Verdichtungsstufen des Luftverdichtungssystems, vorzugsweise zwischen der ersten Verdichtungsstufe und einem der zweiten Verdichtungsstufe vorgeschalteten Zwischenkühler, in den Kathoden-Zuluftpfad eingeleitet. In der ersten Verdichtungsstufe wird die aus der Umgebung angesaugte Luft verdichtet, wobei sie sich zugleich erwärmt. Mit Einleiten des Abluftteilmassenstroms stromabwärts der ersten Verdichtungsstufe in den Kathoden-Zuluftpfad wird demnach nicht nur eine Befeuchtung, sondern ferner eine Kühlung der Luft erreicht. Durch Einleiten des Abluftteilmassenstroms stromabwärts der ersten Verdichtungsstufe und stromaufwärts eines Zwischenkühlers wird eine gute Durchmischung von feuchter und trockener Luft erreicht. Zugleich verringert sich die Gefahr, dass in der feuchten Luft enthaltener Wasserdampf kondensiert und zur Entstehung von Wassertröpfchen in der zweiten Verdichtungsstufe beiträgt. Die mittels des rezirkulierten Abluftteilmassenstroms bewirkte Kühlung trägt zur Optimierung der Zwischenkühlung bei. Zugleich wird eine Entlastung des Zwischenkühlers und/oder eines Ladeluftkühlers erreicht.

Sofern die zweite Verdichtungsstufe durch einen Abgasturbolader realisiert wird und der zu rezirkulierende Abluftteilmassenstrom einem Turbinenbypass entnommen wird, sinkt im Voll-Lastpunkt mit dem Rezirkulationsmassenstrom die Turbinenleistung des Abgasturboladers. Dies hat ein kleineres Druckverhältnis im Bereich der zweiten Verdichtungsstufe zur Folge. Das heißt, dass die erste Verdichtungsstufe ein höheres Druckverhältnis bereitstellen muss bzw. die Leistung der ersten Verdichtungsstufe erhöht werden muss. Da sich jedoch gleichzeitig die Leistung der ersten Verdichtungsstufe durch den Rezirkulationsmassenstrom verringert, heben sich beide Effekte weitestgehend auf. Kurzzeitig kann mit dieser Maßnahme eine zusätzliche Befeuchtung im Voll-Lastpunkt erzielt werden. In den Teil-Lastpunkten wird demgegenüber ein Massenstrom für die Rezirkulation verwendet, der sowieso über den Turbinenbypass abgeleitet wird. Somit geht in den Teil-Lastpunkten der Turbine kein Massenstrom verloren.

Vorteilhafterweise wird die Einleitung des Abluftteilmassenstroms in den Kathoden-Zuluftpfad mittels eines ansteuerbaren Ventils, vorzugsweise mittels eines Regelventils, insbesondere in Form eines Proportionalventils, oder getakteten Schaltventils, gesteuert. In den Kathoden-Zuluftpfad kann somit eine definierte Menge an feuchter Luft bzw. Abluft eingeleitet werden. Zudem kann die Einleitung von Abluft in den Kathoden-Zuluftpfad zeitlich begrenzt bzw. zu bestimmten Zeiten vorgenommen werden. Sofern ein Proportionalventil als ansteuerbares Ventil verwendet wird, kann die Abluftmenge bzw. der Abluftteilmassenstrom über den Öffnungsquerschnitt des Ventils eingestellt werden. Im Fall eines getakteten Schaltventils kann derselbe Effekt über die Taktung erzielt werden. Wahlweise kann die Rezirkulation von Abluft auch stationär bzw. dauerhaft durchgeführt werden

Des Weiteren bevorzugt wird im Kathoden-Abluftpfad ein Druckniveau eingestellt, das über dem Druckniveau im Kathoden-Zuluftpfad zwischen den beiden Verdichtungsstufen liegt. Das heißt, dass lediglich das ansteuerbare Ventil geöffnet werden muss, damit Abluft aus dem Kathoden-Abluftpfad über die Verbindungsleitung in den Kathoden-Zuluftpfad strömt. Mittels einer geeigneten Sensorik und/oder mit Hilfe von Modellen kann die Druckdifferenz ermittelt und bei der Ansteuerung des Ventils berücksichtigt werden. Vorzugsweise öffnet das Ventil nur, wenn eine entsprechende Freigabe über die Druckdifferenz vorliegt.

Gemäß der Erfindung wird der Abluftteilmassenstrom über einen Bypasspfad zur Umgehung einer Turbine vom Kathoden-Abluftpfad abgezweigt. Das heißt, dass eine Verdichtungsstufe, vorzugsweise die zweite Verdichtungsstufe, durch einen Abgasturbolader mit einer Turbine ausgebildet wird, die von der Abluft im Kathoden-Abluftpfad angeströmt wird. Sofern die Turbine keine variable Turbinengeometrie besitzt, wird in der Regel zur Synchronisierung des Turbinenlaufrads und des im Kathoden-Zuluftpfad angeordneten Verdichterlaufrads ein Abluftteilmassenstrom über den Turbinen-Bypasspfad abgeströmt. Dieser Abluftteilmassenstrom oder nur ein Teil davon kann vorteilhafterweise rezirkuliert und damit einer Nutzung zugeführt werden. Dieser Betriebsmodus weist ferner den Vorteil auf, dass die Leistung der ersten Verdichtungsstufe nicht erhöht werden muss.

Mit Hilfe des vorgeschlagenen Verfahrens können darüber hinaus weitere Betriebsmodi realisiert werden.

Beispielsweise kann ein temporärer Rezirkulationsbetrieb mit einer Rezirkulationsrate gefahren werden, die dazu führt, dass der Luftmassenstrom der ersten Verdichtungsstufe um den Rezirkulationsmassenstrom reduziert wird. Damit einher geht eine temporäre Absenkung des Lambda-Werts im Kathoden-Zuluftpfad, da der Rezirkulationsmassenstrom sauerstoffverarmt ist. Die Lambda-Absenkung ist daher zeitlich beschränkt.

In einem weiteren Betriebsmodus kann eine Rezirkulationsrate gewählt werden, die dazu führt, dass der Luftmassenstrom der ersten Verdichtungsstufe nur soweit abgesenkt wird, dass der Sauerstoffgehalt nach dem Einleiten des Rezirkulationsmassenstroms in den Kathoden-Zuluftpfad dem gewünschten Lambda-Wert entspricht, was zur Folge hat, dass der Luftmassenstrom durch die zweite Verdichtungsstufe erhöht werden muss. Zusätzlich kann über einen weiteren Bypasspfad zur Umgehung der Brennstoffzelle eine Aufteilung des Luftmassenstroms bewirkt werden, so dass ein Teilmassenstrom über den Bypasspfad nicht der Brennstoffzelle zugeführt, sondern in den Kathoden-Abluftpfad abgeführt wird.

Ferner kann die Rezirkulation von Abluft aus dem Kathoden-Abluftpfad gänzlich ausgesetzt werden, indem das ansteuerbare Ventil geschlossen gehalten wird.

In Weiterbildung der Erfindung wird vorgeschlagen, dass die zur Rezirkulation des Ablutfteilmassenstroms eingesetzte Verbindungsleitung vor dem Abstellen des Brennstoffzellensystems trocken geblasen wird. Auf diese Weise werden Schäden durch Eisdruck bei tiefen Außentemperaturen vermieden. Die zum Trockenblasen erforderliche Luft kann über einen Bypass aus dem Kathoden-Zuluftpfad abgezweigt werden. Hierzu wird im Bypass ein Bypassventil geöffnet. Vorzugsweise wird beim Ausblasen das ansteuerbare Ventil getaktet betrieben, so dass anhaftende Wassertröpfchen/Feuchtigkeit sicher entfernt werden bzw. wird.

Das zur Lösung der eingangs genannten Aufgabe ferner vorgeschlagene Brennstoffzellensystem umfasst mindestens eine Brennstoffzelle, die zum Zuführen von Luft an einen Kathoden-Zuluftpfad und zum Abführen von Abluft an einen Kathoden-Abluftpfad angeschlossen ist. Im Kathoden-Zuluftpfad ist dabei ein Luftverdichtungssystem angeordnet, das eine erste Verdichtungsstufe und eine zweite Verdichtungsstufe umfasst. Erfindungsgemäß mündet in den Kathoden-Zuluftpfad eine Verbindungsleitung, die unmittelbar oder mittelbar über einen Bypasspfad zur Umgehung einer Turbine mit dem Kathoden-Abluftpfad verbunden ist, so das über die Verbindungsleitung ein Abluftteilmassenstrom aus dem Kathoden-Abluftpfad in den Kathoden-Zuluftpfad einleitbar ist.

Das vorgeschlagene Brennstoffzellensystem ist demnach insbesondere zur Durchführung des zuvor beschriebenen erfindungsgemäßen Verfahrens geeignet bzw. kann nach dem zuvor beschriebenen erfindungsgemäßen Verfahren betrieben werden. Demzufolge können mit Hilfe des vorgeschlagenen Brennstoffzellensystems die gleichen Vorteile erzielt werden. Insbesondere kann mit Hilfe des in den Kathoden-Zuluftpfad eingeleiteten Abluftteilmassenstroms eine Befeuchtung der Kathoden-Zuluft erreicht werden, so dass eine zusätzliche Befeuchtungseinrichtung verzichtbar ist. Darüber hinaus wird eine Kühlung der Kathoden-Zuluft erzielt, die zu verbesserten Zwischenkühlung und/oder zu einer Entlastung eines ferner vorgesehenen Zwischenkühlers führt. Ein weiterer Vorteil ergibt sich daraus, dass Abluft aus dem Kathoden-Abluftpfad rezirkuliert und somit einer Nutzung zugeführt wird. In der Folge steigt die Effizienz des Brennstoffzellensystems.

Bevorzugt mündet die zur Rezirkulation des Abluftteilmassenstroms erforderliche Verbindungsleitung zwischen der ersten Verdichtungsstufe und der zweiten Verdichtungsstufe, vorzugsweise zwischen der ersten Verdichtungsstufe und einem der zweiten Verdichtungsstufe vorgeschalteten Zwischenkühler, in den Kathoden-Zuluftpfad. In diesem Bereich kann eine besonders effektive Befeuchtung und Kühlung der Kathoden-Zuluft bewirkt werden. Zugleich wird eine gute Durchmischung von feuchter und trockener Luft erreicht. Ferner wird die Gefahr der Kondensation von in der Abluft enthaltenem Wasserdampf gemindert.

Des Weiteren bevorzugt ist im Kathoden-Abluftpfad, in der Verbindungsleitung oder im Bypasspfad zur Umgehung der Turbine ein ansteuerbares Ventil angeordnet. Mit Hilfe des ansteuerbaren Ventils kann der zu rezirkulierende Abluftteilmassenstrom gesteuert werden. Das ansteuerbare Ventil ist vorzugsweise ein Regelventil, insbesondere in Form eines Proportionalventils, oder ein getaktetes Schaltventil, so dass der zu rezirkulierende Abluftteilmassenstrom über den Öffnungsquerschnitt des Proportionalventils oder die Taktung des getakteten Schaltventils regelbar ist.

Gemäß einer bevorzugten Ausführungsform der Erfindung ist die erste Verdichtungsstufe mehrflutig ausgeführt. Bei einem mehrflutigen Verdichter werden mindestens zwei Verdichterlaufräder parallel angeströmt. Der Verdichter kann somit einen symmetrischen Aufbau aufweisen, so dass sich die auf das Axiallager wirkenden Kräfte verringern. Ferner können die Verdichterräder kleiner ausgeführt werden, da bei zwei Verdichterrädern auf jedes Verdichterrad nur noch der halbe Massenstrom kommt. Entsprechend verringert sich das Trägheitsmoment des Rotors, was sich wiederum vorteilhaft auf die Dynamik auswirkt.

Alternativ oder ergänzend wird vorgeschlagen, dass die zweite Verdichtungsstufe als Abgasturbolader ausgeführt ist. Die Vorteile der Erfindung treten in dieser Ausgestaltung eines erfindungsgemäßen Brennstoffzellensystems besonders deutlich zum Vorschein, da im Betrieb des Abgasturboladers - zumindest in den Teil-Lastpunkten - ein an der Turbine vorbeizuführender Abluftteilmassenstrom anfällt, der mit Hilfe des erfindungsgemäßen Verfahrens nunmehr einer Nutzung zugeführt werden kann.

Bevorzugte Ausführungsformen der Erfindung werden nachfolgend anhand der beigefügten Zeichnungen näher erläutert. Diese zeigen:
Fig. 1 eine schematische Darstellung eines ersten erfindungsgemäßen Brennstoffzellensystems,
Fig. 2 eine schematische Darstellung eines zweiten erfindungsgemäßen Brennstoffzellensystems und
Fig. 3 eine schematische Darstellung eines dritten erfindungsgemäßen Brennstoffzellensystems.

### Ausführliche Beschreibung der Zeichnungen

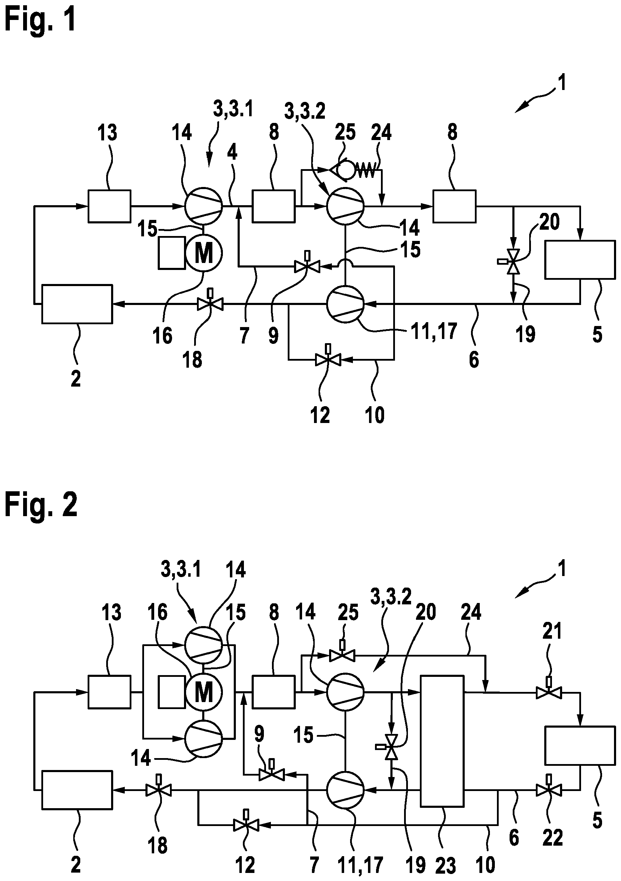

Der Fig. 1 ist beispielhaft ein erfindungsgemäßes Brennstoffzellensystem 1 mit einer Brennstoffzelle 5 zu entnehmen, die über einen Kathoden-Zuluftpfad 4 mit Sauerstoff versorgbar ist. Hierzu wird Luft aus einer Umgebung 2 angesaugt und über einen Luftfilter 13 einer ersten Verdichterstufe 3.1 sowie einer zweiten Verdichterstufe 3.2 eines mehrstufigen Luftverdichtungssystems 3 zugeführt. Jede Verdichterstufe 3.1, 3.2 weist ein auf einer Welle 15 angeordnetes Verdichterlaufrad 14. Das Verdichterlaufrad 14 der ersten Verdichtungsstufe 3.1 wird mit Hilfe eines Elektromotors 16 und das Verdichterlaufrad 14 der zweiten Verdichtungsstufe 3.2 wird mit Hilfe einer Turbine 11 angetrieben. Das heißt, dass die zweite Verdichtungsstufe 3.2 durch einen Abgasturbolader realisiert wird. Die Turbine 11 besitzt ein Turbinenlaufrad 17, das gemeinsam mit dem Verdichterlaufrad 14 des Abgasturboladers auf der Welle 15 angeordnet ist, so dass das Turbinenlaufrad 17 von Abluft angeströmt wird, die im Betrieb des Brennstoffzellensystems 1 aus der Brennstoffzelle 5 austritt und über einen Kathoden-Abluftpfad 6 abgeführt wird. Zur Synchronisierung der beiden Laufräder des Abgasturboladers ist jeweils ein Bypasspfad 10, 24 vorgesehen, über den jeweils ein Teilmassenstrom am jeweiligen Laufrad vorbeigeführt werden kann. In jedem Bypasspfad 10, 24 ist ein Bypassventil 12, 25 angeordnet. Bypass 24 mit Bypassventil 25 sind optional. Gemäß einer alternativen nicht dargestellten Ausführungsform wird auf den Bypass 24 und das Bypassventil 25 verzichtet. Des Weiteren ist im Kathoden-Abluftpfad 6 stromabwärts der Turbine 11 ein Druckregelventil 18 zur Drosselung des Abluftmassenstroms angeordnet. Das Druckregelventil 18 kann ggf. entfallen, wenn die Turbine 11 des Abgasturboladers eine variable Turbinengeometrie aufweist.

Das Brennstoffzellensystem 1 der Fig. 1 weist im Kathoden-Zuluftpfad 4 zwei Zwischenkühler 8 auf. Ein erster Zwischenkühler 8 ist zwischen den beiden Verdichtungsstufen 3.1, 3.2 ein zweiter Zwischenkühler 8 ist stromabwärts der zweiten Verdichtungsstufe 3.2 angeordnet. Der erste Zwischenkühler 8 ist optional. Der zweite Zwischenkühler 8 kann auch durch eine Vorrichtung zur Wassereinspritzung (nicht dargestellt) ersetzt werden. Stromaufwärts des ersten Zwischenkühlers 8 mündet eine Verbindungsleitung 7 in den Kathoden-Zuluftpfad 4, die andernends an den Kathoden-Abluftpfad 6 angeschlossen ist. In der Verbindungsleitung 7 ist zudem ein ansteuerbares Ventil 9 angeordnet. Wird das Ventil 9 geöffnet, strömt aufgrund der vorherrschenden Druckverhältnisse Abluft bzw. feuchte Luft aus dem Kathoden-Abluftpfad 6 über die Verbindungsleitung 7 in den Kathoden-Zuluftpfad 4. Die Kathoden-Zuluft wird auf diese Weise befeuchtet und gekühlt. Zugleich wird ein Teil der Abluft rezirkuliert und einer Nutzung zugeführt.

Zur Umgehung der Brennstoffzelle 5 ist ein Bypasspfad 19 mit einem Bypassventil 20 vorgesehen. Soll ein Zuluftteilmassenstrom aus dem Kathoden-Zuluftpfad 4 in den Kathoden-Abluftpfad 6 abgeströmt werden, kann das Bypassventil 20 geöffnet werden. Das Bypassventil 20 kann ferner geöffnet werden, um im Abstellfall die Verbindungsleitung 7 trocken zu blasen.

Der Fig. 2 ist ein zweites erfindungsgemäßes Brennstoffzellensystem 1 zu entnehmen. Dieses weist einen zweiflutigen Verdichter als erste Verdichtungsstufe 3.1 auf. Das heißt, dass der Verdichter zwei Verdichterlaufräder 14 auf einer gemeinsamen Welle 15 aufweist, die von einem Elektromotor 16 angetrieben werden. Anstelle des zweiten Zwischenkühlers 8 ist zudem ein Wärmetauscher 23 vorgesehen, der die kühlere Abluft des Kathoden-Abluftpfads 6 zum Kühlen der erwärmten Kathoden-Zuluft nutzt. Der Wärmetauscher 23 ist vorliegend zwischen dem Bypasspfad 19 zur Umgehung der Brennstoffzelle 5 und der Brennstoffzelle 5 angeordnet. Darüber hinaus sind im Kathoden-Zuluftpfad 4 stromaufwärts der Brennstoffzelle 5 ein erstes Absperrventil 21 und im Kathoden-Abluftpfad 6 stromabwärts der Brennstoffzelle 5 ein zweites Absperrventil 22 vorgesehen. Durch Schließen der Absperrventile 21, 22 und Öffnen des im Bypasspfad 19 angeordneten Bypassventils 20 kann die Kathoden-Zuluft vollständig an der Brennstoffzelle 5 vorbeigeführt werden.

Bei dem Brennstoffzellensystem 1 der Fig. 2 ist die Verbindungsleitung 7 zur Rezirkulation eines Abluftteilmassenstroms an den Bypasspfad 10 zur Umgehung einer Turbine 11 eines Abgasturboladers, der die zweite Verdichtungsstufe 3.2 ausbildet, angeschlossen. Die Anbindung an den Kathoden-Abluftpfad 6 besteht somit lediglich mittelbar über den Bypasspfad 10.

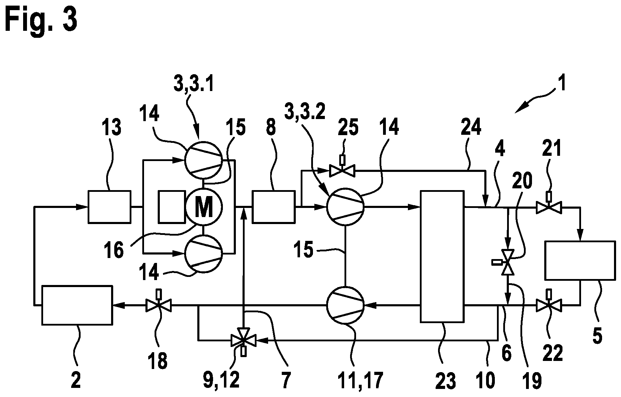

Eine Modifikation des Brennstoffzellensystems 1 der Fig. 2 ist in der Fig. 3 dargestellt. Hier erfolgt die Anbindung der Verbindungsleitung 7 an den Bypasspfad 10 über das Bypassventil 12, das zugleich das ansteuerbare Ventil 9 ausbildet. Somit kann ein Ventil eingespart werden. Der Wärmetauscher 23 ist zudem derart angeordnet, dass über den Bypasspfad 19 zwar die Brennstoffzelle 5, nicht aber der Wärmetauscher 23 umgangen werden kann.

Die Erfindung ist nicht auf die dargestellten Ausführungsbeispiele beschränkt. Weitere Abwandlungen sind möglich, die insbesondere die Anordnung der verschiedenen Bypasspfade, die Anordnung und/oder das Vorsehen eines Wärmetauschers und/oder eines zweiten Zwischenkühlers betreffen. Die Topologievarianz ist somit vergleichsweise hoch.

## Patentansprüche

1. Verfahren zum Betreiben eines Brennstoffzellensystems (1), bei dem Luft aus der Umgebung (2) angesaugt, mit Hilfe eines eine erste Verdichtungsstufe (3.1) und eine zweite Verdichtungsstufe (3.2) umfassenden Luftverdichtungssystems (3) verdichtet und über einen Kathoden-Zuluftpfad (4) mindestens einer Brennstoffzelle (5) zugeführt wird und bei dem aus der Brennstoffzelle (5) austretende Abluft über einen Kathoden-Abluftpfad (6) abgeführt wird, wobei zumindest temporär ein Abluftteilmassenstrom aus dem Kathoden-Abluftpfad (6) über eine Verbindungsleitung (7) in den Kathoden-Zuluftpfad (4) eingeleitet wird, **dadurch gekennzeichnet, dass** der Abluftteilmassenstrom über einen Bypasspfad (10) zur Umgehung einer Turbine (11) vom Kathoden-Abluftpfad (6) abgezweigt wird.

2. Verfahren nach Anspruch 1, **dadurch gekennzeichnet, dass** der Abluftteilmassenstrom zwischen den beiden Verdichtungsstufen (3.1, 3.2), vorzugsweise zwischen der ersten Verdichtungsstufe (3.1) und einem der zweiten Verdichtungsstufe (3.2) vorgeschalteten Zwischenkühler (8), in den Kathoden-Zuluftpfad (4) eingeleitet wird.

3. Verfahren nach Anspruch 1 oder 2, **dadurch gekennzeichnet, dass** die Einleitung des Abluftteilmassenstroms in den Kathoden-Zuluftpfad (4) mittels eines ansteuerbaren Ventils (9), vorzugsweise mittels eines Regelventils, insbesondere in Form eines Proportionalventils, oder getakteten Schaltventils, gesteuert wird.

4. Verfahren nach einem der vorhergehenden Ansprüche, **dadurch gekennzeichnet, dass** im Kathoden-Abluftpfad (6) ein Druckniveau eingestellt wird, das über dem Druckniveau im Kathoden-Zuluftpfad (4) zwischen den beiden Verdichtungsstufen (3.1, 3.2) liegt.

5. Verfahren nach einem der vorhergehenden Ansprüche, **dadurch gekennzeichnet, dass** die Verbindungsleitung (7) vor dem Abstellen des Brennstoffzellensystems (1) trocken geblasen wird, wobei vorzugsweise das ansteuerbare Ventil (9) getaktet betrieben wird.

6. Brennstoffzellensystem (1), umfassend mindestens eine Brennstoffzelle (5), die zum Zuführen von Luft an einen Kathoden-Zuluftpfad (4) und zum Abführen von Abluft an einen Kathoden-Abluftpfad (6) angeschlossen ist, wobei im Kathoden-Zuluftpfad (4) ein Luftverdichtungssystem (3) angeordnet ist, das eine erste Verdichtungsstufe (3.1) und eine zweite Verdichtungsstufe (3.2) umfasst, **dadurch gekennzeichnet, dass** in den Kathoden-Zuluftpfad (4) eine Verbindungsleitung (7) mündet, die unmittelbar oder mittelbar über einen Bypasspfad (10) zur Umgehung einer Turbine (11) mit dem Kathoden-Abluftpfad (6) verbunden ist, so das über die Verbindungsleitung (7) ein Abluftteilmassenstrom aus dem Kathoden-Abluftpfad (6) in den Kathoden-Zuluftpfad (4) einleitbar ist.

7. Brennstoffzellensystem (1) nach Anspruch 6, **dadurch gekennzeichnet, dass** die Verbindungsleitung (7) zwischen der ersten Verdichtungsstufe (3.1) und der zweiten Verdichtungsstufe (3.2), vorzugsweise zwischen der ersten Verdichtungsstufe (3.1) und einem der zweiten Verdichtungsstufe (3.2) vorgeschalteten Zwischenkühler (8), in den Kathoden-Zuluftpfad (4) mündet.

8. Brennstoffzellensystem (1) nach Anspruch 6 oder 7,
**dadurch gekennzeichnet, dass** im Kathoden-Abluftpfad (6), in der Verbindungsleitung (7) oder im Bypasspfad (10) zur Umgehung der Turbine (11) ein ansteuerbares Ventil (9), vorzugsweise ein Regelventil, insbesondere in Form eines Proportionalventils, oder ein getaktetes Schaltventil, angeordnet ist.

9. Brennstoffzellensystem (1) nach einem der Ansprüche 6 bis 8,
**dadurch gekennzeichnet, dass** die erste Verdichtungsstufe (3.1) mehrflutig ausgeführt ist und/oder die zweite Verdichtungsstufe (3.2) als Abgasturbolader ausgeführt ist.

## Claims

1. Method for operating a fuel-cell system (1), in which air is sucked in from the surroundings (2), is compressed with the aid of an air-compression system (3) comprising a first compression stage (3.1) and a second compression stage (3.2), and is fed to at least one fuel cell (5) via a cathode supply-air path (4), and in which exhaust air exiting the fuel cell (5) is discharged via a cathode exhaust-air path (6), wherein an exhaust-air partial mass flow is introduced at least temporarily into the cathode supply-air path (4) from the cathode exhaust-air path (6) via a connecting line (7), **characterized in that** the exhaust-air partial mass flow is branched off from the cathode exhaust-air path (6) via a bypass path (10) for bypassing a turbine (11).

2. Method according to Claim 1, **characterized in that** the exhaust-air partial mass flow is introduced into the cathode supply-air path (4) between the two compression stages (3.1, 3.2), preferably between the first compression stage (3.1) and an intermediate cooler (8) which is arranged before the second compression stage (3.2).

3. Method according to Claim 1 or 2, **characterized in that** the introduction of the exhaust-air partial mass flow into the cathode supply-air path (4) is controlled by means of an actuatable valve (9), preferably by means of a regulating valve, in particular in the form of a proportional valve, or clocked switching valve.

4. Method according to one of the preceding claims, **characterized in that**, in the cathode exhaust-air path (6), a pressure level which is above the pressure level in the cathode supply-air path (4) between the two compression stages (3.1, 3.2) is set.

5. Method according to one of the preceding claims, **characterized in that** the connecting line (7) is blown dry before the fuel-cell system (1) is shut down, wherein preferably the actuatable valve (9) is operated in a clocked manner.

6. Fuel-cell system (1) comprising at least one fuel cell (5) which, for feeding of air, is connected to a cathode supply-air path (4) and, for discharge of exhaust air, is connected to a cathode exhaust-air path (6), wherein, in the cathode supply-air path (4), there is arranged an air-compression system (3) comprising a first compression stage (3.1) and a second compression stage (3.2), **characterized in that** a connecting line (7) which is connected to the cathode exhaust-air path (6) directly or indirectly via a bypass path (10) for bypassing a turbine (11) opens out into the cathode supply-air path (4), so that an exhaust-air partial mass flow is able to be introduced into the cathode supply-air path (4) from the cathode exhaust-air path (6) via the connecting line (7).

7. Fuel-cell system (1) according to Claim 6, **characterized in that** the connecting line (7) opens out into the cathode supply-air path (4) between the first compression stage (3.1) and the second compression stage (3.2), preferably between the first compression stage (3.1) and an intermediate cooler (8) which is arranged before the second compression stage (3.2).

8. Fuel-cell system (1) according to Claim 6 or 7, **characterized in that** an actuatable valve (9), preferably a regulating valve, in particular in the form of a proportional valve, or a clocked switching valve, is arranged in the cathode exhaust-air path (6), in the connecting line (7) or in the bypass path (10) for bypassing the turbine (11).

9. Fuel-cell system (1) according to one of Claims 6 to 8, **characterized in that** the first compression stage (3.1) is of multiple-channel design and/or the second compression stage (3.2) is designed as an exhaust-gas turbocharger.

## Revendications

1. Procédé de fonctionnement d'un système de pile à combustible (1), dans lequel de l'air est aspiré à partir de l'environnement (2), comprimé à l'aide d'un système de compression d'air (3) comprenant un premier étage de compression (3.1) et un second étage de compression (3.2), et fourni à au moins une pile à combustible (5) par l'intermédiaire d'un trajet d'air d'alimentation de cathode (4), et dans lequel l'air d'échappement sortant de la pile à combustible (5) est évacué par l'intermédiaire d'un trajet d'air d'échappement de cathode (6), un flux massique partiel d'air d'échappement provenant du trajet d'air d'échappement de cathode (6) étant introduit au moins temporairement dans le trajet d'air d'alimentation de cathode (4) par l'intermédiaire d'une conduite de raccordement (7), **caractérisé en ce que** le flux massique partiel d'air d'échappement est dérivé du trajet d'air d'échappement de cathode (6) par l'intermédiaire d'un trajet de dérivation (10) afin de contourner une turbine (11).

2. Procédé selon la revendication 1, **caractérisé en ce que** le flux massique partiel d'air d'échappement est introduit dans le trajet d'air d'alimentation de cathode (4) entre les deux étages de compression (3.1, 3.2), de préférence entre le premier étage de compression (3.1) et un refroidisseur intermédiaire (8) monté en amont du second étage de compression (3.2).

3. Procédé selon la revendication 1 ou 2, **caractérisé en ce que** l'introduction du flux massique partiel d'air d'échappement dans le trajet d'air d'alimentation de cathode (4) est commandée au moyen d'une soupape pilotable (9), de préférence au moyen d'une soupape de régulation, en particulier sous la forme d'une soupape proportionnelle, ou d'une soupape de commutation cadencée.

4. Procédé selon l'une quelconque des revendications précédentes, **caractérisé en ce qu'**un niveau de pression est réglé dans le trajet d'air d'échappement de cathode (6), lequel niveau de pression se situe au-dessus du niveau de pression du trajet d'air d'alimentation de cathode (4) entre les deux étages de compression (3.1, 3.2).

5. Procédé selon l'une quelconque des revendications précédentes, **caractérisé en ce que** la conduite de raccordement (7) est soumise à un soufflage à sec avant l'arrêt du système de pile à combustible (1), la soupape pilotable (9) étant de préférence mise en fonctionnement de manière cadencée.

6. Système de pile à combustible (1), comprenant au moins une pile à combustible (5), qui est raccordée pour fournir de l'air à un trajet d'air d'alimentation de cathode (4) et pour évacuer de l'air d'échappement vers un trajet d'air d'évacuation de cathode (6), un système de compression d'air (3) étant disposé dans le trajet d'air d'alimentation de cathode (4), lequel système comprend un premier étage de compression (3.1) et un second étage de compression (3.2), **caractérisé en ce qu'**une conduite de raccordement (7) débouche dans le trajet d'air d'alimentation de cathode (4), laquelle conduite de raccordement est reliée directement ou indirectement au trajet d'air d'échappement de cathode (6) par l'intermédiaire d'un trajet de dérivation (10) afin de contourner une turbine (11), de telle sorte qu'un flux massique partiel d'air d'échappement provenant du trajet d'air d'échappement de cathode (6) peut être introduit dans le trajet d'air d'alimentation de cathode (4) par l'intermédiaire de la conduite de raccordement (7).

7. Système de pile à combustible (1) selon la revendication 6, **caractérisé en ce que** la conduite de raccordement (7) débouche dans le trajet d'air d'alimentation de cathode (4) entre le premier étage de compression (3.1) et le second étage de compression (3.2), de préférence entre le premier étage de compression (3.1) et un refroidisseur intermédiaire (8) monté en amont du second étage de compression (3.2).

8. Système de pile à combustible (1) selon la revendication 6 ou 7, **caractérisé en ce qu'**une soupape pilotable (9), de préférence une soupape de régulation, en particulier sous la forme d'une soupape proportionnelle, ou une soupape de commutation cadencée, est disposée dans le trajet d'air d'échappement de cathode (6), dans la conduite de raccordement (7) ou dans le trajet de dérivation (10) afin de contourner la turbine (11).

9. Système de pile à combustible (1) selon l'une quelconque des revendications 6 à 8, **caractérisé en ce que** le premier étage de compression (3.1) est mis en œuvre sous une forme à flux multiples et/ou **en ce que** le second étage de compression (3.2) est mis en œuvre sous forme de turbocompresseur à gaz d'échappement.
